# EUROPEAN PATENT SPECIFICATION

(11) **EP 2 409 229 B1**
(45) Date of publication and mention of the grant of the patent: **24.10.2018**
(21) Application number: 10712826.6
(22) Date of filing: 15.03.2010
(51) Int. Cl.: G06F 9/451, H04L 29/08

(54) **A FRAMEWORK FOR SUPPORTING MULTI-DEVICE COLLABORATION**
FRAMEWORK ZUR UNTERSTÜTZUNG DER ZUSAMMENARBEIT VON MEHREREN GERÄTEN
CADRE DE PRISE EN CHARGE D'UNE COLLABORATION MULTI-DISPOSITIFS

(30) Priority: 16.03.2009 US 160683 P; 05.06.2009 US 479745
(43) Date of publication of application: 25.01.2012
(73) Proprietor: Apple Inc., Cupertino CA 95014 (US)
(72) Inventor: GARCIA, Roberto Jr, Cupertino CA 95014 (US); ABUAN, Joe, S., Cupertino CA 95014 (US); TUNG, Berkat, S., Cupertino CA 95014 (US); NORMILE, Jim, Cupertino CA 95014 (US); STEWART, William, Cupertino CA 95014 (US); ALLAMANCHE, Eric, Cupertino CA 95014 (US); BOROGOVE, Meriko, Cupertino CA 95014 (US); BENNETT, Jonathan, J., Cupertino CA 95014 (US)
(74) Representative: Barnfather, Karl Jon
(86) International application number: PCT/US2010/027334
(87) International publication number: WO 2010/107703

(56) References cited:
- US-A- 5 852 661
- US-A1- 2004 122 957
- US-B2- 7 299 257
- SUN MICROSYSTEMS: "Jini Architecture Specification 1.2", INTERNET CITATION, 31 December 2001 (2001-12-31), XP002279289, Retrieved from the Internet: URL:www.sun.com/software/jini/specs/index [retrieved on 2004-05-04]
- AL-MASRI E. ET AL.: "Enhancing the Discovery of Mobile Services", WWW 2008, [Online] 21 April 2008 (2008-04-21), - 25 April 2008 (2008-04-25), pages 1-10, XP002587025, Beijing, China Retrieved from the Internet: URL:http://www2.research.att.com/~rjana/Mo bEA2008/final/MobEA2008-02.pdf> [retrieved on 2010-06-14]
- KIA MING PHUA ET AL: "A web-based internet java phone for real-time voice communication", WORLD WIDE WEB, BALTZER SCIENCE PUBLISHERS, BUSSUM, NL, vol. 3, 1 January 2000 (2000-01-01), pages 193-203, XP002965615, ISSN: 1386-145X, DOI: DOI:10.1023/A:1019298100614
- SUKKAR R A: "ECHO DTECTION AND DELAY ESTIMATION USING A PATTERN RECOGNITION APPROACH AND CEPSTRAL CORRELATION", ICASSP 2007,, vol. 4, 15 April 2007 (2007-04-15), pages 909-912, XP002481308, [retrieved on 2007-04-01]
- BUENO G A ET AL: "MoCA: A Middleware for Developing Collaborative Applications for Mobile Users", IEEE DISTRIBUTED SYSTEMS ONLINE, IEEE SERVICE CENTER, NEW YORK, NY, US, vol. 5, no. 10, 1 October 2004 (2004-10-01), pages 2-2, XP011121803, ISSN: 1541-4922

## Description

### Priority Claim

This application claims the benefit of the filing date of US Provisional Patent Application No. 61/160,683, filed March 16, 2009.

### Cross-Referenced Application

The present application is related to the following commonly-owned, concurrently-filed application: application serial no. __________ (Attorney Docket No. 4860P7897), filed June 5, 2009, entitled "MULTIFUNCTIONAL DEVICES AS VIRTUAL ACCESSORIES".

### FIELD OF THE DISCLOSURE

This disclosure relates to a framework for supporting multi-device collaboration.

### COMPUTER PROGRAM LISTING

A portion of the disclosure of this patent document contains material which is subject to copyright protection. The copyright owner has no objection to facsimile reproduction by anyone of the patent document or the patent disclosure, as it appears in the Patent & Trademark Office patent file or records, but otherwise reserves all copyright rights whatsoever.

### BACKGROUND OF THE DISCLOSURE

Various devices such as electronic devices, computing systems, portable devices, and handheld devices have software gaming applications. These devices can network with each other for a multiplayer gaming experience.

One prior gaming device provides a built-in microphone and supports wireless IEEE 802.11 (Wi-Fi) standards, allowing players to interact with each other within short range (10-30 meters, depending on conditions) or online with a Wi-Fi connection service. This gaming device allows the sharing of a game between two players.

However, this gaming device requires the establishment of a network connection between devices prior to sharing the game or prior to sharing information about the game.

US2004122957 (A1) relates to a system that facilitates transferring data between system components. During operation, the system receives a transfer session object at a data sink component through a universal data transfer interface, wherein the transfer session object contains mobile code that implements a source-specific data transfer protocol for communicating with a data source component. Next, the system retrieves data from the data source component through the transfer session object.

### SUMMARY OF THE DESCRIPTION

The present invention provides a method and device as defined in the appended claims.

At least certain examples of the present disclosure include one or more application programming interfaces in an environment with software interacting with one or more software applications. Various function calls or messages are transferred via the application programming interfaces between the software and software applications. Application programming interfaces can be used, for example, to transfer function calls that support multi-device collaboration (e.g., music creation, document creation, multi-player games) and voice chat operations.

At least certain examples of the present disclosure include a method for operating through an application programming interface (API). The method includes transferring a function call to create a session object in order to establish, for example, a communication between two devices. The function call can specify a mode of the session object, a service type, and a service name. The method further can include advertising the service type and the service name. The service name can include a truncated name, a unique identification, and a state of service of a software application. The service type and the service name can be advertised prior to setting up of a communication channel between the two devices, so another user can determine from the service type or the service name whether to set up the communication channel.

At least some embodiments of the present disclosure include a method for operating through an application programming interface (API) to allow for a voice chat between two devices in conjunction with other communication or gaming services on the two devices. The method includes establishing a first connection between a first device and a second device with the first connection being associated with a software application. The method can include determining whether a second connection between the first device and the second device can be established using voice chat software to provide a voice chat service between the first and second devices. The method can include transferring a first function call to request use of the first connection for the voice chat if the second connection fails.

In certain examples, the number of devices involved in these methods may be greater than two. Various devices which perform one or more of the foregoing methods and machine readable media which, when executed by a processing system, cause the processing system to perform these methods, are also described.

Other methods, devices and machine readable media are also described.

### BRIEF DESCRIPTION OF THE DRAWINGS

The disclosure is described by way of example with reference to the accompanying drawings, wherein:
FIG. 1 illustrates a framework for supporting multi-device collaboration in a mobile device in accordance with one example of the present disclosure;
FIG. 2 is flow chart of a method for supporting multi-device collaboration in a mobile device according to examples of the present disclosure;
FIG. 3 is flow chart of a method for supporting multi-device collaboration in a mobile device in accordance with one example of the present disclosure;
FIG. 4 is flow chart of a method for operating through an application programming interface (API) to establish a collaborative application and a voice chat in one embodiment of the present disclosure;
FIG. 5 illustrates a network diagram for implementing a collaborative application and a voice chat in accordance with one embodiment of the present disclosure;
FIG. 6 illustrates a processing system having an echo suppressor in accordance with one example of the present disclosure;
FIG. 7 is a perspective view of a device in accordance with one example of the present disclosure;
FIG. 8 shows an example of a wireless device which includes the capability for wireless communication; and
FIG. 9 shows another example of a device in accordance with one example of the present disclosure.

### DETAILED DESCRIPTION

Various embodiments and aspects of the disclosure will be described with reference to details discussed below, and the accompanying drawings will illustrate the various embodiments. The following description and drawings are illustrative of the disclosure and are not to be construed as limiting the disclosure. Numerous specific details are described to provide a through understanding of various embodiments of the present disclosure. However, in certain instances, well-known or conventional details are not described in order to provide a concise discussion of embodiments of the present disclosure.

Methods and devices for providing multi-device collaboration are described herein. In one example, a method for providing multi-device collaboration between first and second devices includes transferring an initializing function call to create a session object. The function call specifies a mode of the session object, a service type, and a service name. The session object can include functions to discover the second device, connect with the second device, and provide data transport between the connected first and second devices. The service name can include a truncated name, a unique identification, and a state of service of a collaborative software application associated with the first device. The method can include detecting a network and advertising the service type and the service name via the network. The service type and service name may be advertised prior to establishing the connection between the first and second devices.

In one example, the session object provides features such that a user can detect a network connection (e.g., Bluetooth, WiFi, cellular), browse for other devices in this network to obtain a list of services, can determine the collaborative services (e.g., music creation, document creation, gaming applications) on the other devices and the state of service (e.g., busy or available) for each of those collaborative services before connecting to those devices in contrast to conventional approaches. This can make finding collaborative applications on another device much easier than a conventional system which requires a connection first before collaborative applications can be identified.

At least certain examples of the present disclosure include one or application programming interfaces in an environment with collaborative kit software interacting with a software application. The collaborative kit software may support a gaming environment which is just one exemplary environment and other environments may use one or more examples of the invention; other environments can include collaborative document creation or collaborative music creation, etc. Various function calls or messages are transferred via the application programming interfaces between the collaborative kit software and one or more software applications using the collaborative kit software through the application programming interfaces (APIs). Transferring the function calls or messages may include issuing, initiating, invoking, receiving or responding to the function calls or messages. Application programming interfaces can be used to transfer function calls to implement collaboration (e.g., gaming, document creation, music creation, etc.) networking, service discovery, and voice chat operations for a device having a display region. An API may also implement functions having parameters, variables, or pointers. An API may receive parameters as disclosed or other combinations of parameters. In addition to the APIs disclosed, other APIs individually or in combination can perform similar functionality as the disclosed APIs.

The display region is a form of a window. A window is a display region which may not have a border and may be the entire display region or area of a display. In some examples, a display region may have at least one window and/or at least one view (e.g., web, text, or image content). A window may have at least one view. The methods, systems, and apparatuses disclosed can be implemented with display regions, windows, and/or views.

At least certain examples of the disclosure may be part of a digital media player, such as a portable music and/or video media player, which may include a media processing system to present the media, a storage device to store the media and may further include a radio frequency (RF) transceiver (e.g., an RF transceiver for a cellular telephone) coupled with an antenna system and the media processing system. In certain examples, media stored on a remote storage device may be transmitted to the media player through the RF transceiver. The media may be, for example, one or more of music or other audio, still pictures, or motion pictures.

The portable media player may include a media selection device, such as a click wheel input device on an iPod® or iPod Nano® media player from Apple Computer, Inc. of Cupertino, CA, a touch screen input device, pushbutton device, movable pointing input device or other input device. The media selection device may be used to select the media stored on the storage device and/or the remote storage device. The portable media player may, in at least certain examples, include a display device which is coupled to the media processing system to display titles or other indicators of media being selected through the input device and being presented, either through a speaker or earphone(s), or on the display device, or on both display device and a speaker or earphone(s). In some examples, the display device and input device are integrated while in other examples the display device and input device are separate devices.

Examples of the disclosure described herein may be part of other types of data processing systems, such as, for example, entertainment systems or personal digital assistants (PDAs), or general purpose computer systems, or special purpose computer systems, or an embedded device within another device, or cellular telephones which do not include media players, or multi touch tablet devices, or other multi touch devices, or devices which combine aspects or functions of these devices (e.g., a media player, such as an iPod®, combined with a PDA, an entertainment system, and a cellular telephone in one device, an iPhone®). In this disclosure, electronic devices and consumer devices are types of devices.

In some examples, a platform provides various collaboration, voice chat, service discovery, and networking operations. The platform includes hardware components and an operating system. The hardware components may include a processing unit coupled to an input panel and a memory coupled to the processor. The operating system includes one or more programs that are stored in the memory and configured to be executed by the processing unit. One or more programs may include various instructions for transferring function calls or messages through an application programming interface in order to perform various collaboration, voice chat, service discovery, and networking operations.

In some examples, the platform includes a framework containing a library of software code. The framework interacts with the programs of the platform to provide application programming interfaces (APIs) for performing various gaming, collaboration, voice chat, service discovery, and networking operations. The framework may also include associated resources (e.g., images, text, etc.) that are stored in a single directory.

An API is a source code interface that a computer system or program library provides in order to support requests for services from a software application. An API is specified in terms of a programming language that can be interpretative or compiled when an application is built, rather than an explicit low level description of how data is laid out in memory. The software that provides the functionality described by an API is said to be an implementation of the API.

Service discovery is performed by devices of a network (e.g., personal area network, local area network, wide area network) broadcasting services that they provide. One protocol by which service discovery may be performed is Bonjour available from Apple Inc. Other service discovery protocols can be used as well. U.S. Patent Application 12/405,130, filed March 16, 2009, entitled "SERVICE DISCOVERY FUNCTIONALITY UTILIZING PERSONAL AREA NETWORK PROTOCOLS" which describes service discovery protocols in more detail.

Service discovery results in indication of services that are available via the personal area network and not necessarily the physical devices that provide the services. For example, a wireless device may utilize DNS formatted data over a Bluetooth connection to determine services that are available from other Bluetooth devices within range. Other combinations of formats and protocols may also provide service discovery in a similar manner.

By broadcasting services that are available and receiving broadcast messages from other devices, the devices of the network can compile a list of services available via the network. Each device of the personal area network can generate its own list of services available from local and remote devices.

In one example, the list can be dynamically updated based on subsequently-received broadcasts. For example, if a device is removed from the network (e.g. the device leaves an area with WiFi wireless coverage), the services provided by that device can be removed from the list. As another example, if a device is added to the network (e.g., a device enters an area with WiFi wireless coverage), the services provided by the new device can be added to the list in response to a broadcast service availability message.

In one example, service discovery information may be transmitted using DNS or mDNS format. That is, portions of the broadcast may be in DNS or mDNS format. As but one example, DNS-formatted fields having information related to services provided by a broadcasting device may be transmitted in Bonjour-formatted packets over a Bluetooth-compliant wireless connection. Other format-protocol combinations can also be used. Thus, service availability information may be available to a receiving device without the receiving device being connected to the device providing the service. This may provide a more efficient and/or more secure environment in which services may be shared between devices as compared to requiring connections for discovery.

The services provided may be a broad range of services including, but not limited to, print services, local area network (LAN) access services, wide area network (WAN) network services, cellular telephone services, data storage services, application services (e.g., media playback, games, collaborative document creation services, recording). Discovery and access to other services may also be supported and/or provided in the same manner.

The list of available services may be presented to a user of the local device. Alternatively, the local device may have been configured for a default action to respond to certain service availability conditions. In one example, a list of available services may be presented to a user of the local device through an interface such as a display. The user may be able to select one of the available collaborative services (e.g., music creation, poker, hockey, other games). In one example, the list of available services may be updated if no services are selected.

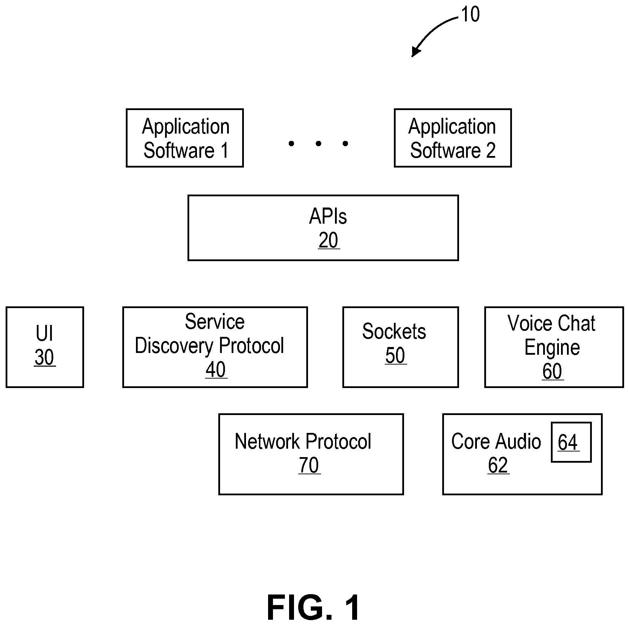

FIG. 1 illustrates a framework for supporting multi-device collaboration in a mobile device in accordance with one example of the present disclosure. As noted elsewhere in this disclosure, multiplayer gaming is just one exemplary environment or use of the one or more examples of the invention. The framework 10 includes APIs 20 (e.g., game picker API, game connectivity API, voice chat API, and collaborative kit session API) for providing an interface between the framework 10 and software applications (such as software application no. 1 and software application no. 2). For example, game developers can write software code of one or more gaming applications (such as software application no. 1 and software application no. 2) to call these APIs 20. A game connectivity API provides connectivity functionality using a UI (user interface) 30, a service discovery protocol 40 (e.g., Bonjour network services from Apple Inc. of Cupertino, CA), sockets 50, and one or more network protocols 70 (e.g., Bluetooth, WiFi, cellular).

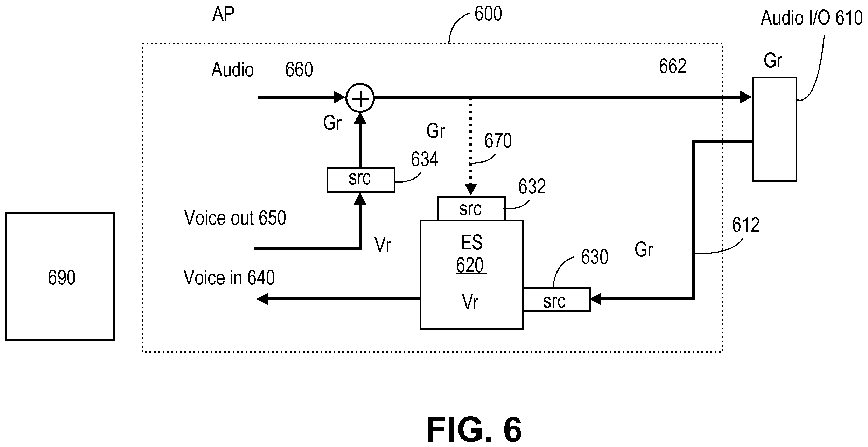

Sockets 50 is a software construct that allows two processes to communicate with network addresses and ports. A voice chat API provides voice chat functionality for integrating voice chat into any software application (e.g., gaming application). A voice chat engine 60 is optimized to support both high quality gaming audio and voice chat simultaneously. A core audio block 62 includes an echo suppressor 64. An example of an echo suppressor is described in conjunction with Fig. 6.

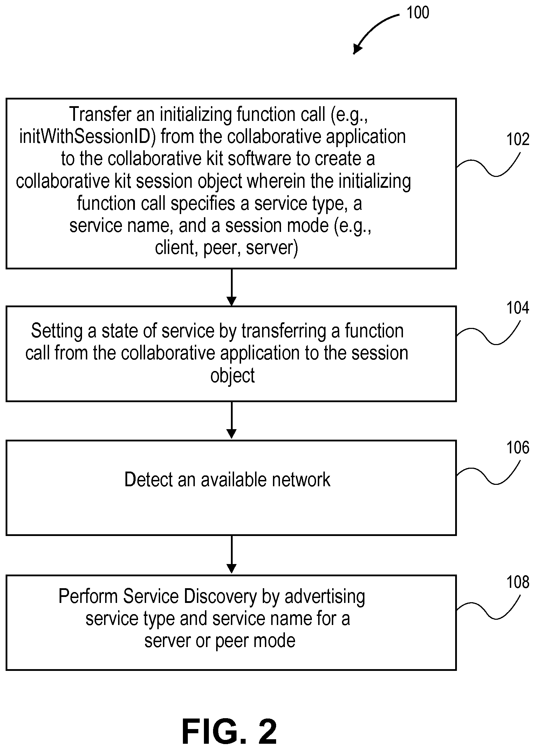

FIG. 2 is flow chart of a method for supporting multi-device collaboration in a mobile device according to examples of the present disclosure. The application programming interface operates in an environment with a framework in which software (e.g., collaborative kit software which can provide the one or more APIs) interacts with one or more collaborative software applications (e.g., gaming, music). In an example, collaborative kit software provides support for collaborative applications. The method 100 for providing collaborations includes transferring an initializing function call from the gaming application to the collaborative kit software to create a collaborative kit session object, which manages connections between a network of peers. The collaborative kit session object can include functions to discover available peers, connect with these available peers, and provide data transport between the connected peers. The function call specifies a service type (e.g., sessionID), a service name, and a session mode at block 102. Examples of service type (e.g., sessionID) may include chess, poker, other games, music creation, etc. In an example, all instances of the application need to have the same session ID in order to be able to join a collaboration. The service name having a predetermined number of characters (e.g., 63 characters) may include a truncated name (e.g., displayName such as J's chess), a unique ID, which is used to identify specific instances of the application, and state of service information (e.g., application is busy, application is available for collaboration). In one example, the session mode may be a server, a client, or a peer mode. More details regarding the different session modes are described below.

Next, the method 100 can include detecting an available network (e.g., Bluetooth, WiFi, cellular) at block 104. The method 100 can include setting a state of service (e.g., busy state, available state) of the collaborative application by transferring a function call (e.g., set available state) from the collaborative application to the session object at block 106. Next, the method 100 can include performing service discovery by advertising service type (e.g., sessionID) and service name for a particular session mode (e.g., server or a peer mode) that advertises services at block 106. In an example, a list of services associated with a device is advertised. These services (e.g., games) can be advertised by, for example, using the Bonjour network services which allow devices using that service to advertise their abilities to other devices on a network. The list of services may include one or more collaborative applications.

As discussed above, the service name can include a truncated name, a unique identification, and the state of service. The state of service may indicate a busy or available for collaboration. In one example, a busy state indicates that the software application which specified the busy state will not participate in a collaborative application with another device having that same software application; the available state, on the other hand, indicates that the collaborative software application (e.g., poker game) on one device is available to engage in a multiplayer game with another software application (e.g., the poker game) on another device. Optionally a state may include a group ID of a predefined set of players (e.g., group of poker players). The service type (e.g., sessionID) identifies how the collaborative application wants to communicate in terms of one or more protocols. If a service type is used by a collaborative developer then it may be hashed to reduce its file size.

In an example, service information is included in a text record having property information. For example, a text record may include a name (e.g., poker) and subfield of the name (e.g., Aces high poker). The text record can be advertised such that a user can browse for services and determine that 10 people are playing poker and 5 of these are playing Aces high poker. The user can then connect to the Aces high poker game if so desired using a group ID of the Aces high poker game and/or by contacting an individual playing in the Aces high poker game.

In one example, the present invention provides the ability for the user to form a network connection (e.g., Bluetooth, WiFi, cellular), browse for other devices in this network, determine the games (or other services) on the other devices and the state of service (e.g., busy or available) for each of those games (or other services) before connecting to those devices in contrast to conventional approaches. This can make finding another available game on another device much easier than a conventional system which requires a connection first before available games can be identified.

In one example, the session mode may be a server, a client, or a peer mode. The mobile device in server mode advertises its domain name, service type, and service name to other devices. The mobile device in client mode browses or searches for other devices and associated discovery information such as domain name, service type, and service name of these other devices. The mobile device in peer mode can advertise its domain name, service type, and service name to other devices. The mobile device in peer mode can also browse or searche for other devices and associated discovery information such as domain name, service type, and service name of these other devices. In peer mode, the advertising and browsing may occur at different times in a cyclical manner. For example, during advertising a device may be unable to respond to a connection request from another device. During browsing, a device may be unable to advertise services at the same time. Alternatively, a device may be able to browse and advertise at the same time. In certain examples of the present disclosure, transferring the one or more calls is any one of issuing, initiating, invoking or receiving the one or more calls.

The above operations of FIG. 2 can detect a network and perform service discovery by discovering or advertising services between devices prior to wireless connections being formed between the devices. The wireless connections may be part of various types of networks (e.g., Bluetooth, WiFi, cellular).

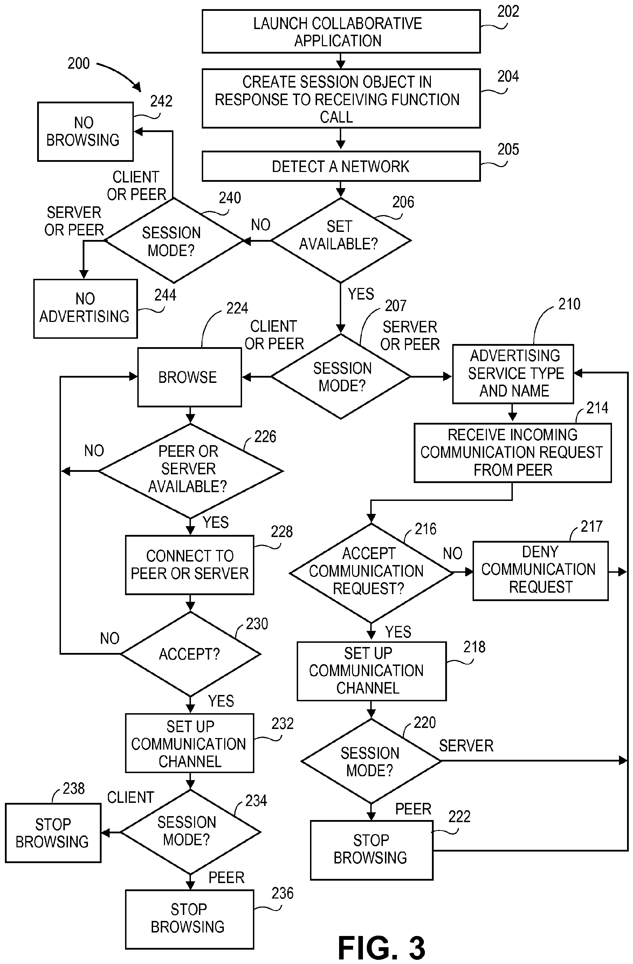

FIG. 3 is flow chart of a method for supporting multi-device collaboration in a mobile device in accordance with one example of the present disclosure. The method 200 includes receiving a user input to launch a collaborative application at block 202. The user input may be in the form of an input key, button, wheel, touch (e.g., a touch on a multi-touch input panel attached to a display device), or other means for interacting with the device. The method 200 further includes creating a collaborative kit session object in response to receiving an initializing function call from the collaborative application through an API to collaborative kit software at block 204. The function call can specify a service type (e.g., sessionID), a service name (e.g., truncated name, unique ID, and state of service), and a session mode (e.g., client, server, or peer).

Next, the method 200 can include detecting an available network (e.g., Bluetooth, WiFi, cellular) at block 205. The method 200 can include transferring a set available call from the collaborative application to the collaborative kit session object at block 206. The set available call sets the available state (e.g., busy, available for service) of the collaborative application. If the collaborative application sets the set available state parameter to YES on the collaborative kit session object, then the collaborative application has an available state of service for collaboration and the method 200 further includes determining a session mode at block 207. The session mode can be determined based on the function call that specifies the session mode. If the session mode is server or peer, then the method 200 further includes performing service discovery by advertising service type (e.g., sessionID) and service name (e.g., truncated name, unique ID, state of service) at block 210. In an example, a list of services associated with a device is advertised. The list of services may include one or more collaborative applications (or other applications such as collaborative document creation, etc.)

The method 200 further includes transferring a function call (e.g., session did receive connection request) from the session object to the collaborative application to indicate receiving an incoming connection request from another device at block 214. The method 200 can include determining whether the incoming connection request is accepted at decision block 216. For example, a user of the device may determine whether incoming connection request from another device is accepted. The method 200 can include setting up a communication channel (e.g., wireless connection) between the devices at block 218 if the incoming connection request is accepted at decision block 216. A function call is transferred from the session object to the collaborative application to indicate the acceptance of the connection request. Next, the method can include determining a session mode at block 220. If a server mode is determined, then the method 200 returns to the advertising operation of block 210.

In one example, if a peer mode is determined, then the method 200 optionally stops browsing (e.g., block 224) at block 222 and returns to the advertising operation of block 210. For example, a Bluetooth connection between two peers may not conveniently allow browsing due to network constraints in addition to the collaborative connection established at block 218 between the peers. In another example, a WiFi connection between two peers does conveniently allow browsing in addition to the collaborative connection between the peers.

If the incoming connection request is not accepted at block 216, then the method includes denying the connection request at block 217. For example, a user selection may deny the incoming connection request or the busy state of the collaborative application may automatically deny this request. Then the method 200 returns to the advertising operation of block 210.

In one example, the acceptance of a connection request has a higher priority than a busy or unavailable state. For example, a peer may have a busy or unavailable state. However, if the peer accepts a connection request from the mobile device, then a connection will be established even though the collaborative application of the peer has a busy state.

Returning to block 207, if the session mode is determined to be client or peer, then the method 200 further includes browsing for peer services of this collaborative application at block 224. The method 200 can include determining whether a peer or server is available at decision block 226. The method 200 further includes connecting with the available peer or server at block 228 if one is available. The session object can transfer a function call (e.g., session peer/server did change state) to the collaborative application that indicates if a peer or server is available at block 226. If no peer or server is available at decision block 226, then the method 200 returns to the browsing operation of block 224.

The method 200 can include transferring a function call (e.g., connect to peer/server with timeout) from the session object to the collaborative application to indicate connecting to the peer or server from the device within a predetermined time period at block 228. The method 200 can include determining whether the connection request is accepted within the predetermined time period at decision block 230. The method 200 can include setting up a communication channel (e.g., wireless connection) between the devices at block 232 if the incoming connection request is accepted at decision block 230. A function call is transferred from the session object to the collaborative application to indicate the acceptance of the connection request. Next, the method can include determining a session mode at block 234. If a client mode is determined, then the method 200 optionally stops browsing and the peers collaborate with the collaborative application at block 238.

In one example, if a peer mode is determined at block 234, then the method 200 optionally stops browsing (e.g., block 224) at block 236 and the peers collaborate with the collaborative application. For example, a Bluetooth connection between two peers may not conveniently allow browsing due to network constraints in addition to the collaborative connection between the peers. In another example, a WiFi connection between two peers does conveniently allow browsing in addition to the collaborative connection between the peers.

In an example, for the peer mode, browsing at block 224 and advertising at block 210 may occur concurrently. A first peer can browse for a second peer and set up a communication channel between the peer devices at block 232. Concurrently, the first peer can advertise services and receive an incoming request from a third peer at block 214. A communication channel between the first and third peer devices may be set up at block 218.

Returning to block 206, if the collaborative application sets the set available parameter to NO, then the collaborative application has an unavailable or busy state. The method 200 can include determining the session mode at decision block 240. Next, the method 200 can include no advertising of the service type and service name at block 244 if server or peer mode is determined. The method 200 can include no browsing at block 242 if client or peer mode is determined.

In some examples, a collaborative kit session object (e.g., game kit session object) can include a service discovery protocol 40 to discover collaborative services (e.g., gaming services) and sockets 50 to establish network connections. The sockets 50 may obtain network addresses of devices and ports of software applications. Network address translation (NAT) techniques or peer relaying may be implemented to form the connections between devices. One or more network protocols 70 (e.g., BlueTooth, WiFi, cellular) provide a data transport mechanism between devices. In one example, the data transport includes two modes: reliable and unreliable. The reliable mode is used for critical information such as a gaming player reaching a new playing level or a gaming player dying. The unreliable mode is used for non-critical information such as a gaming player's current position.

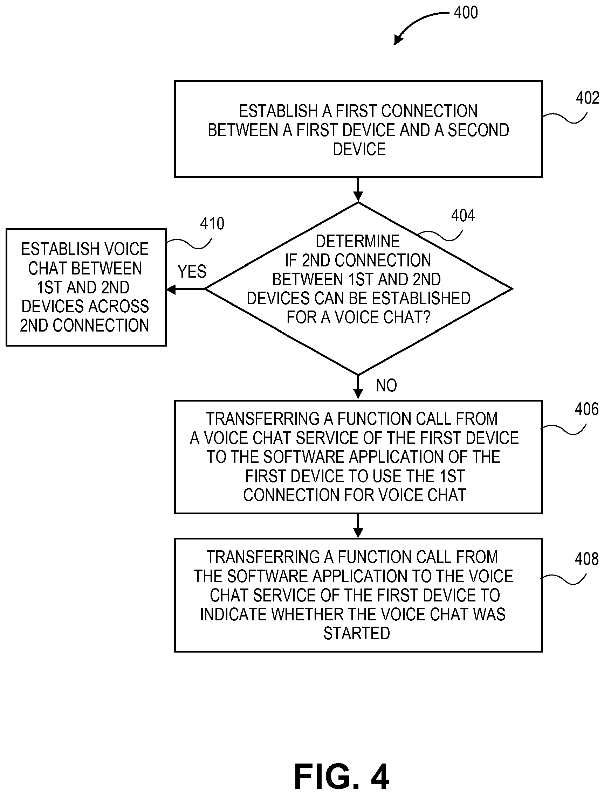

FIG. 4 is flow chart of a method for operating through an application programming interface (API) to establish a voice chat in one embodiment of the present disclosure. The method operates in an environment having a framework with collaborative kit software interacting with one or more software applications (e.g., collaborative applications, gaming applications) on a first device and also collaborative kit software interacting with one or more software applications on a second device. The method 400 can include establishing a first network connection, either direct (e.g., peer-to-peer) or indirect (e.g., via a server, router, or gateway), between the first device and the second device associated with a software application at block 402. In an embodiment, the collaborative kit software provides support for multi-device collaboration between the first and second devices. The method 400 can include determining whether a second connection between the first device and the second device can be established to provide a voice chat service between the first and second devices at block 404. The voice chat service may be part of the collaborative kit software. The method 400 can include transferring a function call from a voice chat service of the first device to the software application of the first device to use the first connection for the voice chat at block 406 if the second connection fails. The method 400 can include transferring a function call at block 408 from the software application to the voice chat service to indicate whether the voice chat was started.

The method 400can include establishing the voice chat between the first and second devices across the second connection if the second connection is successfully established at block 410. In one embodiment, a collaborative application transfers data and audio packets across the first connection simultaneously with a voice chat service across the second connection. The voice chat may be routed over a WiFi connection to avoid obstructing a Bluetooth collaborative connection. Alternatively, the collaborative first connection and the voice chat second connection may occur across the same network.

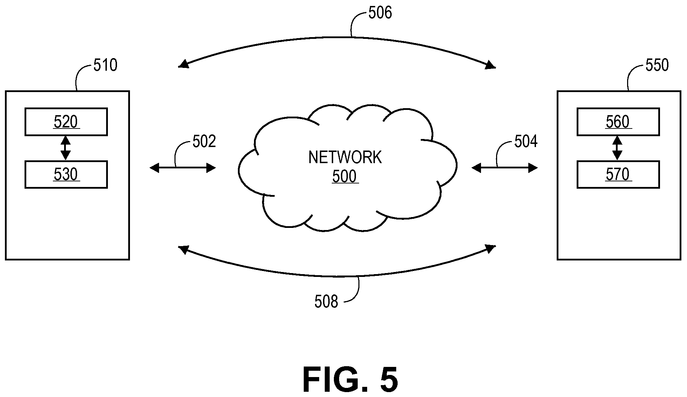

FIG. 5 illustrates a network diagram for providing multi-device collaboration (e.g., music creation, document creation, gaming application, etc.) and a voice chat in accordance with one embodiment of the present disclosure. A network 500 connects devices 510 and 550 via links 502 and 504 or a peer-to-peer connection 506 connects the devices.

In one embodiment, the peer-to-peer connection 506 connects the first and second devices. Users of these devices are collaborating with a collaborative application 520, 560 (e.g., document creation, music creation, hockey, poker, etc). Collaborative kit software 530 and 570 having a collaborative kit API are used to establish the connection 506 between the devices, respectively. The collaborative kit API can select between different types of connections (e.g., Bluetooth, WiFi, cellular). The collaborative kit API can aggregrate a large number of packets into a smaller number of large packets. Conversely, the collaborative kit API can fragment a large packet into a number of smaller packets depending on the requirements of a network protocol connection. A collaborative application transferring data and audio packets can occur simultaneously with a voice chat connection. The voice chat may be routed over a WiFi connection to avoid obstructing a Bluetooth connection. Alternatively, the collaborative connection and the voice chat connection may occur across the same network.

In one embodiment, user A of device 510 wants to establish a voice chat with the user B of the device 550 concurrently with the collaboration between users A and B (e.g., game being played by users A and B). A voice chat service that is part of the collaborative kit software 530 accesses the connection 506 to send a voice chat invite to the software application 560 (e.g., game application), which passes this invite to a voice chat service of the collaborative kit software 570 of user B. The voice chat service of B can inform the software application 560 that it has received the invite. Next, voice chat service of B accepts the invite. The voice chat services of A and B exchange identification information (e.g., participantID) and connection data (e.g., network addresses and ports) for communicating using a voice chat protocol. Next, a peer-to-peer connection 508 can be established between voice chat services of users A and B.

In some embodiments, the peer-to-peer connection 508 can not be established between voice chat services of users A and B. In this case, voice chat service A sends a function call to software application 520 (e.g., game application) or voice chat service B sends a function call to software application 560. The function call indicates a request to use the connection 506 for establishing a voice chat between users A and B because the connection 508 failed.

In an embodiment, an indirect connection from user A to user B is formed for playing the gaming application. The network 500 having one or more servers and/or routers connects the devices using links 502 and 504. A voice chat can be established across connection 508 in the manner described above, except that the voice messages are sent using the indirect connection. If the peer-to-peer connection 508 can not be established between voice chat services of users A and B, then voice chat service A can send a function call to game application 530 or voice chat service B sends a function call to game application 560. The function call indicates a request to use the indirect connection for establishing a voice chat between users A and B because the connection 508 failed.

In certain embodiments, user A and B can establish a connection for playing a gaming application. User A or user B can connect with a different user (e.g., user C, user D) and establish a voice chat with this user.

FIG. 6 illustrates a processing system having an echo suppressor in accordance with one example of the present disclosure. The processing system 600 is associated with a collaborative application (e.g., music creation, gaming application) and includes an audio signal 660 having a sampling rate, Gr, an audio input/output unit 610 (e.g., speaker output, microphone input), a voice input signal 640, and a voice output signal 650. The processing system 600 further includes an echo suppressor 620 and sampling rate converters 630, 632, and 634.

The processing system 600 is designed to generate a high quality audio signal at a high sampling rate (e.g., 44 KHz) for the local collaborative application associated with a device. The processing system 600 can also provide echo suppression for a voice chat occurring simultaneously as the collaborative audio. For example, users A and B can be playing a game together and also voice chatting. Alternatively, users A and B can be playing a game together while user A is voice chatting with user C.

An acoustic echo may occur because of the coupling between the output (e.g., loudspeaker) of a stereo two channel audio signal 662 and input (e.g., microphone) of a single channel voice signal 612 of the I/O unit 610. The ES 620 receives a reference signal 670 that includes the audio signal 660 and the voice out signal 650, which is received from a remote user via network interface 690. The ES 620 also receives a voice input signal 612 from a local user of the device via the I/O unit 610. The voice input signal 612 includes an echo component. The ES 620 uses time domain and frequency domain transforms and processing techniques to cancel the echo component and generates voice input signal 640 having a reduced and/or eliminated echo component. The voice input signal 640 may be sent to the remote user via the network interface 690.

The processing techniques of the ES 620 differ from known processing techniques. The unique implementation of the ES 620 resides in the estimation of a spectral cross correlation function. For known processing techniques, this correlation is calculated for every frequency band. In contrast, the ES 620 calculates the correlation over a psycho-acoustically weighted scale. This results in fewer values to compute saving processing resources and allows the suppressor to better accommodate to the perception by the human ear.

In one example, the spectral cross correlation between the frequency domain representation of the reference signal 670 and the frequency domain representation of the voice input signal 612 is computed as the complex-valued dot product of these two signals. Rather than evaluating a single sum over the whole frequency range, the spectral cross correlation is evaluated over nonoverlapping frequency bands. The band boundaries coincide with the Bark scale, which represents a psychoacoustical scale of frequencies. The scale ranges from 1 to 24 and corresponds to the first 24 critical bands of hearing. This results in a single complex value for every band representing the cross correlation for that same band. By doing so, the system implicitly accounts for psychoacoustical properties of the human hearing system and at the same time significantly reduces the amount of information to be further processed.

In some examples, a first user is playing a multiplayer game with a second user. Each user has a handheld device for playing the game and also voice chatting. The game audio signal 660 may have a sampling rate Gr (e.g., approximately 44.1 KHz) while the voice output and input signals 650 and 640 have a lower sampling rate, Vr, (e.g., approximately 8 KHz). The SRC 634 converts the voice signal with a sampling rate of Vr into a Gr signal that combines with the game audio signal 660. The SRC 632 converts the Gr reference signal into a Vr signal received by the ES 620. The SRC 630 converts the Gr input signal 612 into a Vr signal received by the ES 620. The ES 620 operating at a lower sampling rate of the voice chat cancels the echo component and generates voice input signal 640 having a reduced and/or minimized echo component and a sampling rate of Vr (e.g., approximately 8 KHZ sampling rate). The ES 620 operates at a lower sampling rate (e.g., 8 KHz) to cancel the echo component while conserving processing resources for generating the high quality game audio at a higher sampling rate (e.g., 44.1 KHz). The game audio and voice signals can be processed at any sampling rate and do not need to be integral divisors.

The sampling rate of the voice signals are determined based on network constraints for voice chat while the sampling rate of the audio signal 660 is determined and optimized based on hardware constraints of the processing system 600 and local device.

In one example, the game audio signal is replaced with any high quality audio signal (e.g., music library audio signal) that is processed at a high sampling rate. In an alternative example, the sampling rate of the voice chat (e.g., 12 KHz, 8 KHz, 11.025 KHz, 8 KHz, 11.025 KHz) is an integral divisor of the sampling rate of the game audio (e.g., 48 KHz, 48 KHz, 44.1 KHz, 32 KHz, 22.05 KHz), respectively.

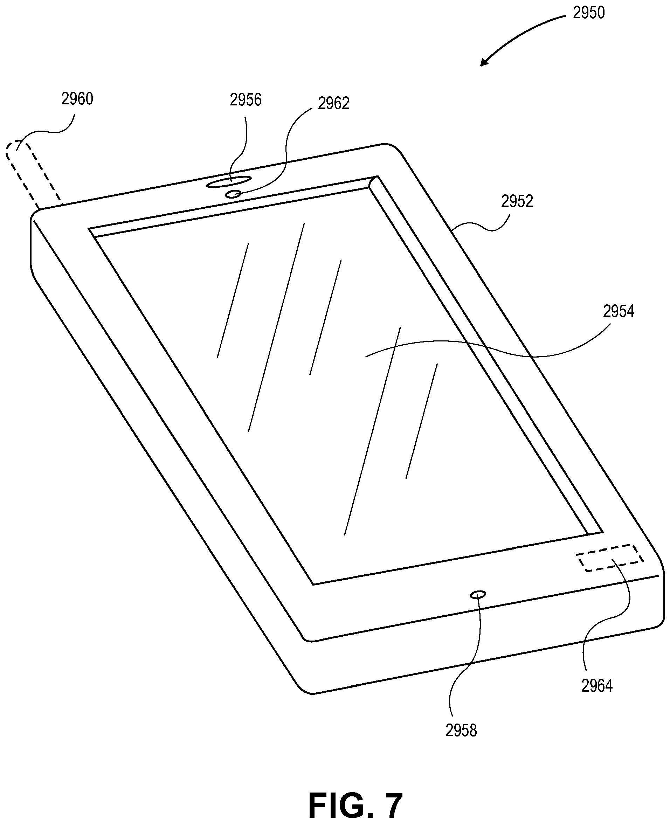

In some embodiments, the methods, systems, and apparatuses of the present disclosure can be implemented in various devices including electronic devices, consumer devices, data processing devices, desktop computers, portable computers, wireless devices, cellular devices, tablet devices, handheld devices, multi touch devices, multi touch data processing devices, any combination of these devices, or other like devices. Figures 7-9 illustrate examples of a few of these devices.

FIG. 7 shows a device 2950 in accordance with one example of the disclosure. The device 2950 may include a housing 2952, a display/input device 2954, a speaker 2956, a microphone 2958 and an optional antenna 2960 (which may be visible on the exterior of the housing or may be concealed within the housing). The device 2950 also may include a proximity sensor 2962 and an accelerometer 2964. The device 2950 may be a cellular telephone or a device which is an integrated PDA and a cellular telephone or a device which is an integrated media player and a cellular telephone or a device which is both an entertainment system (e.g. for playing games) and a cellular telephone, or the device 2950 may be other types of devices described herein. In one particular example, the device 2950 may include a cellular telephone and a media player and a PDA, all contained within the housing 2952. The device 2950 may have a form factor which is small enough that it fits within the hand of a normal adult and is light enough that it can be carried in one hand by an adult. It will be appreciated that the term "portable" means the device can be easily held in an adult user's hands (one or both); for example, a laptop computer, an iPhone, and an iPod are portable devices.

In certain examples of the present disclosure, the device 2950 can be used to implement at least some of the methods discussed in the present disclosure.

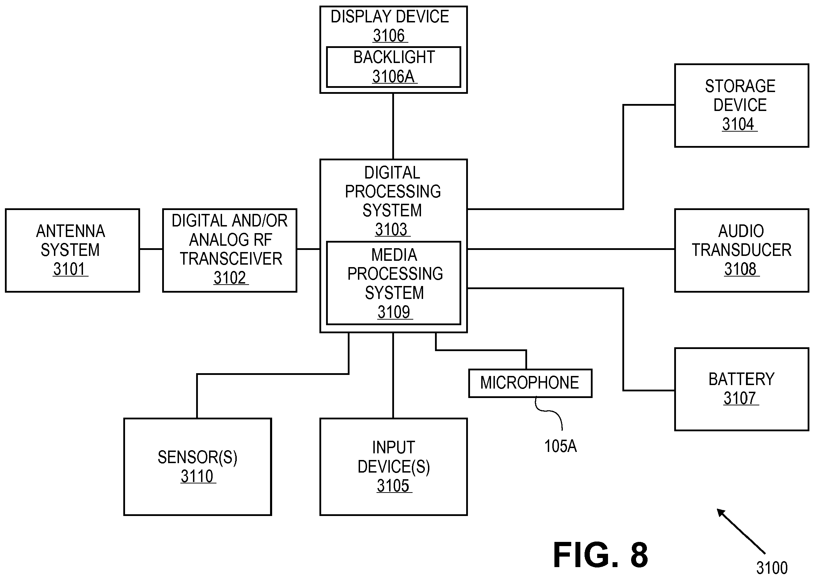

FIG. 8 shows an example of a wireless device which includes the capability for wireless communication. Wireless device 3100 may include an antenna system 3101. Wireless device 3100 may also include a digital and/or analog radio frequency (RF) transceiver 3102, coupled to the antenna system 3101, to transmit and/or receive voice, digital data and/or media signals through antenna system 3101.

Wireless device 3100 may also include a digital processing system 3103 to control the digital RF transceiver and to manage the voice, digital data and/or media signals. Digital processing system 3103 may be a general purpose processing device, such as a microprocessor or controller for example. Digital processing system 3103 may also be a special purpose processing device, such as an ASIC (application specific integrated circuit), FPGA (field-programmable gate array) or DSP (digital signal processor). Digital processing system 3103 may also include other devices, as are known in the art, to interface with other components of wireless device 3100. For example, digital processing system 3103 may include analog-to-digital and digital-to-analog converters to interface with other components of wireless device 3100. Digital processing system 3103 may include a media processing system 3109, which may also include a general purpose or special purpose processing device to manage media, such as files of audio data.

Wireless device 3100 may also include a storage device 3104, coupled to the digital processing system, to store data and/or operating programs for the Wireless device 3100. Storage device 3104 may be, for example, any type of solid-state or magnetic memory device. Storage device 3104 may be or include a machine-readable medium.

Wireless device 3100 may also include one or more input devices 3105, coupled to the digital processing system 3103, to accept user inputs (e.g., telephone numbers, names, addresses, media selections, etc.) Input device 3105 may be, for example, one or more of a keypad, a touchpad, a touch screen, a pointing device in combination with a display device or similar input device.

Wireless device 3100 may also include at least one display device 3106, coupled to the digital processing system 3103, to display information such as messages, telephone call information, contact information, pictures, movies and/or titles or other indicators of media being selected via the input device 3105. Display device 3106 may be, for example, an LCD display device. In one example, display device 3106 and input device 3105 may be integrated together in the same device (e.g., a touch screen LCD such as a multi-touch input panel which is integrated with a display device, such as an LCD display device). The display device 3106 may include a backlight 3106A to illuminate the display device 3106 under certain circumstances. It will be appreciated that the Wireless device 3100 may include multiple displays.

Wireless device 3100 may also include a battery 3107 to supply operating power to components of the system including digital RF transceiver 3102, digital processing system 3103, storage device 3104, input device 3105, microphone 3105A, audio transducer 3108, media processing system 3109, sensor(s) 3110, and display device 3106. Battery 3107 may be, for example, a rechargeable or non-rechargeable lithium or nickel metal hydride battery. Wireless device 3100 may also include audio transducers 3108, which may include one or more speakers, and at least one microphone 3105A. In certain examples of the present disclosure, the wireless device 3100 can be used to implement at least some of the methods discussed in the present disclosure.

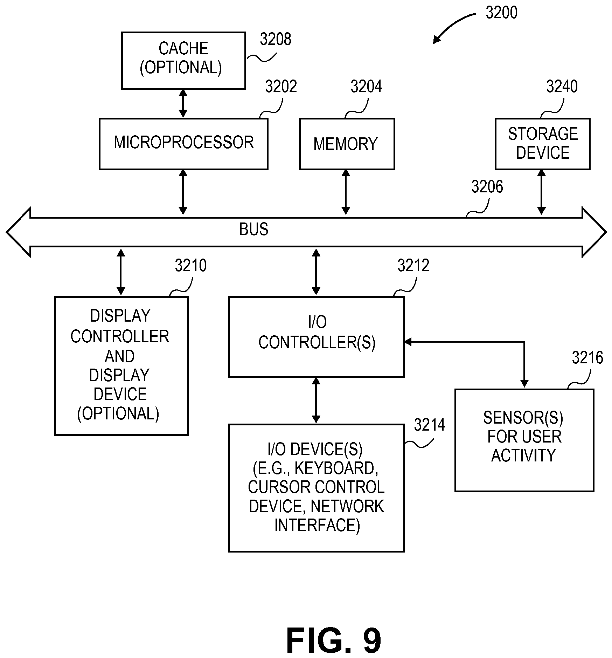

FIG. 9 shows another example of a device according to an example of the disclosure. This device 3200 may include a processor, such as microprocessor 3202, and a memory 3204, which are coupled to each other through a bus 3206. The device 3200 may optionally include a cache 3208 which is coupled to the microprocessor 3202. The device may optionally includes a storage device 3240 which may be, for example, any type of solid-state or magnetic memory device. Storage device 3240 may be or include a machine-readable medium.

This device may also optionally include a display controller and display device 3210 which is coupled to the other components through the bus 3206. One or more input/output controllers 3212 are also coupled to the bus 3206 to provide an interface for input/output devices 3214 and to provide an interface for one or more sensors 3216 which are for sensing user activity. The bus 3206 may include one or more buses connected to each other through various bridges, controllers, and/or adapters as is well known in the art. The input/output devices 3214 may include a keypad or keyboard or a cursor control device such as a touch input panel. Furthermore, the input/output devices 3214 may include a network interface which is either for a wired network or a wireless network (e.g. an RF transceiver). The sensors 3216 may be any one of the sensors described herein including, for example, a proximity sensor or an ambient light sensor. In at least certain implementations of the device 3200, the microprocessor 3202 may receive data from one or more sensors 3216 and may perform the analysis of that data in the manner described herein.

In certain examples of the present disclosure, the device 3200 or device 3100 or combinations of devices 3100 and 3200 can be used to implement at least some of the methods discussed in the present disclosure.

Some portions of the detailed descriptions are presented in terms of algorithms which include operations on data stored within a computer memory. An algorithm is generally a self-consistent sequence of operations leading to a desired result. The operations typically require or involve physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, can refer to the action and processes of a data processing system, or similar electronic device, that manipulates and transforms data represented as physical (electronic) quantities within the system's registers and memories into other data similarly represented as physical quantities within the system's memories or registers or other such information storage, transmission or display devices.

The present disclosure can relate to an apparatus for performing one or more of the operations described herein. This apparatus may be specially constructed for the required purposes, or it may comprise a general purpose computer selectively activated or reconfigured by a computer program stored in the computer. Such a computer program may be stored in a machine (e.g. computer) readable storage medium, such as, but is not limited to, any type of disk including floppy disks, optical disks, CD-ROMs, and magnetic-optical disks, read-only memories (ROMs), random access memories (RAMs), erasable programmable ROMs (EPROMs), electrically erasable programmable ROMs (EEPROMs), flash memory, magnetic or optical cards, or any type of media suitable for storing electronic instructions, and each coupled to a bus.

A machine-readable medium includes any mechanism for storing or transmitting information in a form readable by a machine (e.g., a computer). For example, machines store and communicate (internally and with other devices over a network) code and data using machine-readable media, such as machine storage media (e.g., magnetic disks; optical disks; random access memory; read only memory; flash memory devices; phase-change memory).

In the foregoing specification, the disclosure has been described with reference to specific exemplary embodiments thereof. It will be evident that various modifications may be made thereto without departing from the scope of the following claims. The specification and drawings are, accordingly, to be regarded in an illustrative sense rather than a restrictive sense.

## Claims

1. A method (400) for operating through an application programming interface (API), the method comprising:
in a framework with software of a first device (510) acting as an interface for other software to establish a first connection (502, 504, 506) between the first device and a second device (550), each device having software and transferring function calls between the devices to establish the first connection:
establishing (402) the first connection between the first device and the second device with the first connection being associated with a collaborative software application (530, 570) that is located on at least one of the first and second devices;
determining (404) whether a second connection (508) between the first device and the second device can be established using voice chat software to provide a voice chat service between the first and second devices; and
transferring (408) a first function call from the voice chat service to the collaborative software application of the first or second device to request use of the first connection for the a voice chat if the second connection fails.

2. The method of claim 1, further comprising:
transferring a second function call to indicate whether the voice chat was started across the first connection.

3. The method of claim 1, further comprising:
establishing (410) the voice chat between the first and second devices across the second connection if the second connection is successfully established.

4. The method of claim 3, wherein establishing the second connection further comprises:
using the first connection to send a voice chat invite from a first voice chat service of the first device to a second voice chat service of the second device;
and
exchanging identification information and connection data for communicating between the first and second voice chat services after the voice chat invite is accepted.

5. The method of claim 4, wherein the first connection transfers data and audio packets associated with the collaborative software application simultaneously with the first or second connection providing the voice chat between the first and second voice chat services.

6. A machine-readable medium storing executable program instructions which when executed cause a processing system to perform a method as in any one of claims 1-6.

7. A device (510) having software that acts as an interface for other software to establish a first connection between the device and another device, the device comprising:
a memory to store executable program instructions; and
a processing system coupled to the memory, the processing system to execute the program instructions to establish (402) a first connection (502, 504, 506) between the device and another device (550) with the first connection being associated with a collaborative software application (530) of the device, the processing system to determine (404) whether a second connection (508) between the device and the another device can be established using a voice chat service of the device to provide the voice chat service between the devices, and the processing system to transfer (408) a first function call from the voice chat service to the collaborative software application of the device to request use of the first connection for a voice chat if the second connection fails.

8. The device of claim 7, wherein the processing system is configured to transfer:
a second function call from the software application to the voice chat service to indicate whether the voice chat was started across the first connection.

9. The device of claim 7, wherein the processing system is configured to establish (410):
the voice chat between the devices across the second connection if the second connection is successfully established.

10. The device of claim 9, wherein the processing system is configured to establish the second connection by:
using the first connection to send a voice chat invite from a first voice chat service of the device to a second voice chat service of the another device;
and by exchanging identification information and connection data for communicating between the first and second voice chat services after the voice chat invite is accepted.

11. The device of claim 10, wherein the first connection transfers data and audio packets associated with the collaborative software application simultaneously with the second connection providing the voice chat between the first and second voice chat services.

## Patentansprüche

1. Verfahren (400) zum Betrieb durch eine Anwendungsprogrammierschnittstelle (application programming interface, API), das Verfahren umfassend:
- in einem Framework mit Software von einer ersten Vorrichtung (510), das als eine Schnittstelle für andere Software zum Einrichten einer ersten Verbindung (502, 504, 506) zwischen der ersten Vorrichtung und einer zweiten Vorrichtung (550) agiert, wobei jede Vorrichtung Software aufweist und Funktionsaufrufe zwischen den Vorrichtungen zum Einrichten der ersten Verbindung überträgt:
- Einrichten (402) der ersten Verbindung zwischen der ersten Vorrichtung und der zweiten Vorrichtung mit der ersten Verbindung, die mit einer kollaborativen Softwareanwendung (530, 570) assoziiert ist, die sich auf mindestens einer der ersten und zweiten Vorrichtungen befindet;
- Bestimmen (404), ob eine zweite Verbindung (508) zwischen der ersten Vorrichtung und der zweiten Vorrichtung unter Verwendung von Sprachchat Software eingerichtet werden kann, um einen Sprachchatdienst zwischen den ersten und zweiten Vorrichtungen bereitzustellen; und
- Übertragen (408) eines ersten Funktionsaufrufs von dem Sprachchatdienst an die kollaborative Softwareanwendung der ersten oder der zweiten Vorrichtung, um Verwendung der ersten Verbindung für einen Sprachchat anzufordern, falls die zweite Verbindung fehlschlägt.

2. Verfahren nach Anspruch 1, ferner umfassend:
- Übertragen eines zweiten Funktionsaufrufs, um anzuzeigen, ob der Sprachchat über die erste Verbindung gestartet ist.

3. Verfahren nach Anspruch 1, ferner umfassend:
- Einrichten (410) des Sprachchats zwischen den ersten und zweiten Vorrichtungen über die zweite Verbindung, falls die zweite Verbindung erfolgreich eingerichtet ist.

4. Verfahren nach Anspruch 3, wobei Einrichten der zweiten Verbindung ferner umfasst:
- Verwenden der ersten Verbindung, um eine Sprachchateinladung von einem ersten Sprachchatdienst der ersten Vorrichtung an einen zweiten Sprachchatdienst der zweiten Vorrichtung zu senden; und
- Austauschen von Identifikationsinformationen und Verbindungsdaten zur Kommunikation zwischen den ersten und zweiten Sprachchatdiensten, nachdem die Sprachchateinladung akzeptiert ist.

5. Verfahren nach Anspruch 4, wobei die erste Verbindung Daten und Audiopakete, die mit der kollaborativen Softwareanwendung assoziiert sind, überträgt, während gleichzeitig die erste oder zweite Verbindung den Sprachchat zwischen den ersten und zweiten Sprachchatdiensten bereitstellt.

6. Maschinenlesbares Medium, das ausführbare Programmanweisungen speichert, welche, wenn sie ausgeführt werden, ein Verarbeitungssystem dazu veranlassen ein Verfahren wie in irgendeinem der Ansprüche 1 bis 6 durchzuführen.

7. Vorrichtung (510) mit Software, die als eine Schnittstelle für andere Software agiert, um eine erste Verbindung zwischen der Vorrichtung und einer anderen Vorrichtung einzurichten, wobei die Vorrichtung umfasst:
- einen Speicher zum Speichern ausführbarer Programmanweisungen; und
- ein Verarbeitungssystem, das an den Speicher gekoppelt ist, wobei das Verarbeitungssystem die Programmanweisungen zum Einrichten (402) einer ersten Verbindung (502, 504, 506) zwischen der Vorrichtung und einer anderen Vorrichtung (550) mit der ersten Verbindung, die mit einer kollaborativen Softwareanwendung (530) der Vorrichtung assoziiert ist, ausführt, wobei das Verarbeitungssystem bestimmt (404), ob eine zweite Verbindung (508) zwischen der Vorrichtung und der anderen Vorrichtung unter Verwendung eines Sprachchatdienstes der Vorrichtung eingerichtet werden kann, um den Sprachchatdienst zwischen den Vorrichtungen bereitzustellen, und wobei das Verarbeitungssystem einen ersten Funktionsaufruf von dem Sprachchatdienst an die kollaborative Softwareanwendung der Vorrichtung überträgt (408), um Verwendung der ersten Verbindung für einen Sprachchat anzufordern, falls die zweite Verbindung fehlschlägt.

8. Vorrichtung nach Anspruch 7, wobei das Verarbeitungssystem konfiguriert ist zum Übertragen:
- eines zweiten Funktionsaufrufs von der Softwareanwendung an den Sprachchatdienst, um anzuzeigen, ob der Sprachchat über die erste Verbindung gestartet ist.

9. Vorrichtung nach Anspruch 7, wobei das Verarbeitungssystem konfiguriert ist zum Einrichten (410):
- des Sprachchats zwischen den Vorrichtungen über die zweite Verbindung, falls die zweite Verbindung erfolgreich eingerichtet ist.

10. Vorrichtung nach Anspruch 9, wobei das Verarbeitungssystem konfiguriert ist zum Einrichten der zweiten Verbindung durch:
- Verwenden der ersten Verbindung, um eine Sprachchateinladung von einem ersten Sprachchatdienst der Vorrichtung an einen zweiten Sprachchatdienst der anderen Vorrichtung zu senden;
- und durch Austauschen von Identifikationsinformationen und Verbindungsdaten zur Kommunikation zwischen den ersten und zweiten Sprachchatdiensten, nachdem die Sprachchateinladung akzeptiert ist.

11. Vorrichtung nach Anspruch 10, wobei die erste Verbindung Daten und Audiopakete, die mit der kollaborativen Softwareanwendung assoziiert sind, überträgt, während gleichzeitig die zweite Verbindung den Sprachchat zwischen den ersten und zweiten Sprachchatdiensten bereitstellt.

## Revendications

1. Un procédé (400) pour une mise en oeuvre par l'intermédiaire d'une interface de programmation applicative (API), le procédé comprenant :
dans un framework avec un logiciel d'un premier dispositif (510) jouant le rôle d'une interface pour un autre logiciel pour l'établissement d'une première connexion (502, 504, 506) entre le premier dispositif et un second dispositif (550), chaque dispositif disposant d'un logiciel et transférant des appels de fonctions entre les dispositifs pour l'établissement de la première connexion :
l'établissement (402) de la première connexion entre le premier dispositif et le second dispositif avec la première connexion associée à une application de logiciel collaboratif (530, 570) qui est située sur au moins l'un d'entre le premier et le second dispositif ;
la détermination (404) si une seconde connexion (508) entre le premier dispositif et le second dispositif peut être ou non établie en utilisant un logiciel de discussion vocale pour fournir un service de discussion vocale entre le premier et le second dispositif ; et
le transfert (408) d'un premier appel de fonction du service de discussion vocale à l'application de logiciel collaboratif du premier ou du second dispositif pour requérir l'utilisation de la première connexion pour une discussion vocale si la seconde connexion échoue.

2. Le procédé de la revendication 1, comprenant en outre :
le transfert d'un second appel de fonction pour indiquer si la discussion vocale a ou non été entamée par le biais de la première connexion.

3. Le procédé de la revendication 1, comprenant en outre :
l'établissement (410) de la discussion vocale entre le premier et le second dispositif par le biais de la seconde connexion si la seconde connexion est établie avec succès.

4. Le procédé de la revendication 3, dans lequel l'établissement de la seconde connexion comprend en outre :
l'utilisation de la première connexion pour envoyer une invitation à une discussion vocale d'un premier service de discussion vocale du premier dispositif à un second service de discussion vocale du second dispositif ; et
l'échange d'informations d'identification et de données de connexion pour la communication entre le premier et le second service de discussion vocale après que l'invitation à une discussion vocale a été acceptée.

5. Le procédé de la revendication 4, dans lequel la première connexion transfère des données et des paquets audio associés à l'application de logiciel collaboratif de façon simultanée avec l'obtention de la discussion vocale par la première ou la seconde connexion entre le premier et le second service de discussion vocale.

6. Un support lisible par machine stockant des instructions de programme exécutables qui lorsqu'elles sont exécutées font en sorte qu'un système de traitement mette en oeuvre un procédé selon l'une des revendications 1 à 6.

7. Un dispositif (510) muni d'un logiciel qui joue le rôle d'une interface avec un autre logiciel pour l'établissement d'une première connexion entre le dispositif et un autre dispositif, le dispositif comprenant :
une mémoire pour stocker des instructions de programme exécutables ; et
un système de traitement couplé à la mémoire, le système de traitement étant destiné à exécuter les instructions de programme pour établir (402) une première connexion (502, 504, 506) entre le dispositif et l'autre dispositif (550) avec la première connexion associée à une application de logiciel collaboratif (530) du dispositif, le système de traitement étant destiné à déterminer (404) si une seconde connexion (508) entre le dispositif et l'autre dispositif peut être ou non établie en utilisant un service de discussion vocale du dispositif pour assurer le service de discussion vocale entre les dispositifs, et le système de traitement étant destiné à transférer (408) un premier appel de fonction du service de discussion vocale à l'application de logiciel collaboratif du dispositif pour requérir l'utilisation de la première connexion pour une discussion vocale si la seconde connexion échoue.

8. Le dispositif de la revendication 7, dans lequel le système de traitement est configuré pour transférer :
un second appel de fonction de l'application logicielle au service de discussion vocale pour indiquer si la discussion vocale a été ou non entamée par le biais de la première connexion.

9. Le dispositif de la revendication 7, dans lequel le système de traitement est configuré pour établir (410) :
la discussion vocale entre les dispositifs par le biais de la seconde connexion si la seconde connexion est établie avec succès.

10. Le dispositif de la revendication 9, dans lequel le système de traitement est configuré pour établir la seconde connexion par :
utilisation de la première connexion pour envoyer une invitation à une discussion vocale d'un premier service de discussion vocale du dispositif à un second service de discussion vocale de l'autre dispositif ;
et par échange d'informations d'identification et de données de connexion pour communiquer entre le premier et le second service de discussion vocale après que l'invitation à une discussion vocale a été acceptée.

11. Le dispositif de la revendication 10, dans lequel la première connexion transfère les données et les paquets audio associés à l'application de logiciel collaboratif de façon simultanée avec l'obtention par la seconde connexion de la discussion vocale entre le premier et le second service de discussion vocale.
